# EUROPEAN PATENT APPLICATION

(11) **EP 1 524 020 A1**
(43) Date of publication of application: **20.04.2005**
(21) Application number: 04256208.2
(22) Date of filing: 07.10.2004
(51) Int. Cl.: B01D 27/08, F16J 15/02

(54) **Oil filter gasket with flap**

(30) Priority: 14.10.2003 US 685047
(71) Applicant: ArvinMeritor Technology, LLC, Troy, MI 48084 (US)
(72) Inventor: Bhardwaj, Arun, Gurgaon 122001 Haryana (IN)
(74) Representative: Jones, John Bryn

(57) **Abstract**

An oil filter gasket includes a body and a flap extending inwardly from the body away from a recess of an oil filter housing. The body provides a compression fitting between the oil filter and a mounting structure. The flap also provides a compression fitting between the oil filter and mounting structure. As oil pressure within the oil filter increases, the flap is further forced into engagement with the mounting structure thereby increasing the oil pressure that the oil filter may be subjected to before leaking.

## Description

### BACKGROUND OF THE INVENTION

This invention relates to a fluid filter such as an oil filter, and more particularly, the invention relates to a gasket for fluid filters.

A spin-on type oil filter typically includes a housing containing the filtering components. The housing typically includes a case bottom assembly that comprises a tapping plate and a retainer that gets seamed to a can of the housing during manufacture of the filter. The retainer includes a recess or seat that receives a gasket. The gasket engages the mounting structure to which the oil filter is attached, such as an engine block or a remote oil filter adapter.

The tapping plate includes a threaded hole. The filter is secured to the mounting structure using the threaded hole. The elastomeric gasket is compressed during installation of the filter onto the mounting structure, which retains the oil within the filter and mounting structure during normal operation.

As the engine RPM increases, the oil pressure inside the filter also increases. The increased pressure within the filter can cause the housing to swell and the case bottom assembly to deflect downwardly near the periphery of the filter and away from the mounting structure. As the case bottom assembly deflects downward, the compression of the gasket is reduced thereby compromising the seal between the filter and mounting structure. As a result, oil may leak past the gasket under the increased oil pressure.

Gaskets have employed various cross-sections to enhance the seal of the gasket against the mounting structure under pressure. For example, square, round, oval, D-shaped, double D-shaped, P-shaped, and other shapes have been used. Nonetheless, gasket leaks have still been problematic under high oil pressure. This is of increasing concern since modem oil filters must withstand higher oil pressures due to the increased power of the engines.

Other oil filters have employed tapping plates of increased thickness to reduce the deflection of the case bottom assembly. Still other oil filters have reduced the gasket diameter, increased the gasket hardness, or employed metal rings into the gasket to enhance the sealing of the gasket under higher pressures. These solutions have resulted in increased material cost and/or increased tooling cost.

Therefore, what is needed is an improved oil filter gasket and high oil pressure applications while avoiding increased material or tooling cost.

### SUMMARY OF THE INVENTION AND ADVANTAGES

The present invention provides a fluid filter including a housing having a can with an open end. A tapping plate is arranged at the open end and includes multiple fluid apertures arranged circumferentially around a portion of the tapping plate, which fluidly communicate with fluid passages in the mounting structure. A retainer is secured to the can adjacent to the tapping plate for retaining the tapping plate and filter the components within the housing. The retainer includes an annular recess or seat arranged outwardly of the fluid apertures.

The inventive gasket is seated in the angular recess. The gasket includes a body with a flap extending inwardly from the body and away from the recess. In an example embodiment, the gasket includes a groove arranged between the body and the flap. The body may have a generally quadrangular cross-section.

The housing is secured to a mounting structure having a threaded stud. The threaded hole of the aperture is fastened to the threaded stud. The mounting structure includes a sealing surface which the gasket engages when the filter is in the installed position. The body of the gasket provides a compression fitting. The flap engages the surface and provides a compression fitting under a first force. Pressurized oil within the filter further biases the flap into an engagement with the surface providing a second force to enhance the seal of the gasket between the mounting structure and the filter.

### BRIEF DESCRIPTION OF THE DRAWINGS

Other advantages of the present invention can be understood by reference to the following detailed description when considered in connection with the accompanying drawings wherein:
Figure 1 is a cross-sectional view of the inventive filter prior to installation onto the mounting structure;
Figure 2 is a cross-sectional view of the filter installed onto the mounting structure with the inventive gasket in a compressed state; and
Figure 3 is an enlarged cross-sectional view of the inventive gasket shown in Figure 2.

### DETAILED DESCRIPTION OF THE PREFERRED EMBODIMENT

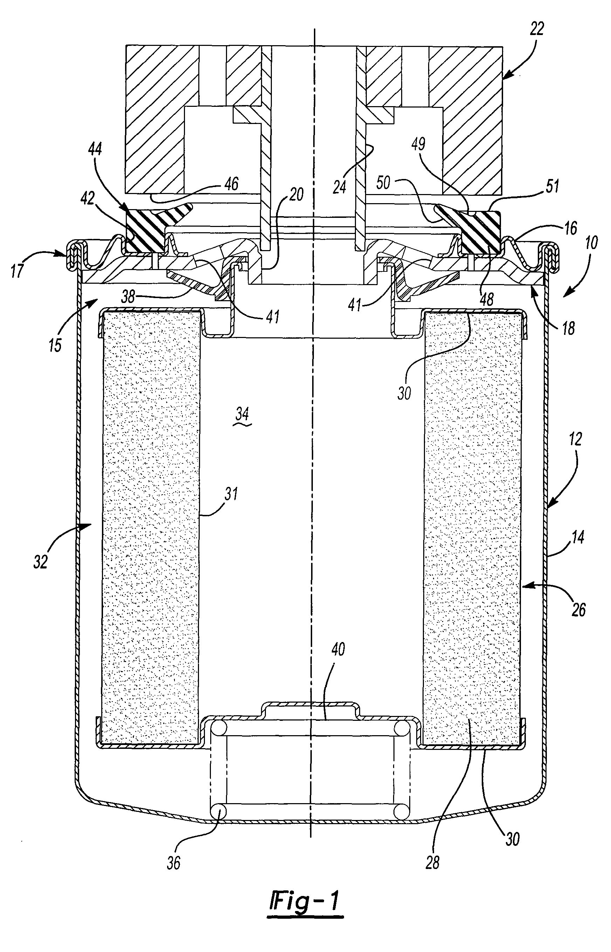

A fluid filter 10 is shown in Figure 1. The filter 10 shown is suitable for use as a vehicle oil filter, however, this invention may be used in any fluid filter application. The filter 10 comprises a housing 12 including a can 14 with a retainer 16 secured to the open end 15 of the can 14. The housing 12 also includes a tapping plate 18 typically arranged interiorly and adjacent to the retainer 16.

The retainer 16 and tapping plate 18 provide what is typically referred to as the case bottom assembly 17. The tapping plate 18 includes a central threaded hole 20. The filter 10 is secured to a mounting structure 22 such as an engine block or remote oil filter adaptor having fluid passages that carry the fluid to and from a desired location such as a vehicle engine. The mounting structure 22 includes a threaded stud 24 that threadingly engages the threaded hole 20 of the tapping plate 18 when the filter 10 is in the installed position. While the tapping plate 18 is typically used to secure the filter 10 to the mounting structure 22, it should be understood that other securing configurations may also be used. For example, a threaded fastener may be passed through a hole in the length of the filter 10 and received in a threaded hole of the mounting structure 22 to clamp the filter 10 to the mounting structure 22. Alternatively, a spring clamp or screw clamp may engage the housing 12 and force the filter 10 into engagement with the mounting structure.

A filter assembly 26 is arranged within the housing 12. The filter assembly 26 includes end disks 30 having a filter media 28, such as a paper filter element, arranged between the end disk 30 in any suitable manner, which is well known in the art. The filter media 28 may define a central opening. Typically, the filter media 28 is a pleated paper element. A spring or guide 36 is arranged between the filter assembly 26 and the housing 12 to position the filter assembly 26 in a desired manner during assembly of the filter 10. The filter assembly 26 is positioned longitudinally within the housing 12 by a spring 36. The spring 36 biases the filter components toward the retainer 16.

The filter 10 has an inlet side 32 on one side of the filter media 28 and an outlet side 34 on the opposite side of the filter media 28. For the arrangement shown, the inlet side 32 corresponds to the outside of the filter assembly 26, and the outlet side 34 corresponds to the inside or central opening of the filter media 28. The retainer 16 and tapping plate 18 include apertures 41 to permit fluid to flow from the structure 22 supporting the filter 10 to the inlet side 32. During normal operation, the fluid flows through the filter media 28 to the central opening, which corresponds to the outlet side 34, to remove debris from the fluid. Fluid then flows through the central opening and exits through the threaded hole 20 back through the structure 22 supporting the filter 10. However, it is to be understood that the fluid flow may be other than described above depending upon the application and customer specifications.

The filter 10 includes an anti drain back valve 38 permitting fluid to flow through the apertures 41 to the inlet side 32 of the filter 10. Multiple apertures 41 are typically arranged circumferentially about a portion of the tapping plate 18. The anti drain back valve 38 prevents fluid flowing from the inlet side 32 back into the mounting structure 22. The filter 10 may also include a relief valve 40 in one of the end disks 30 that opens and permits fluid flow to bypass the filter assembly 26 under high oil differential pressure and flow directly to the outlet side 34 without passing through the filter media 28.

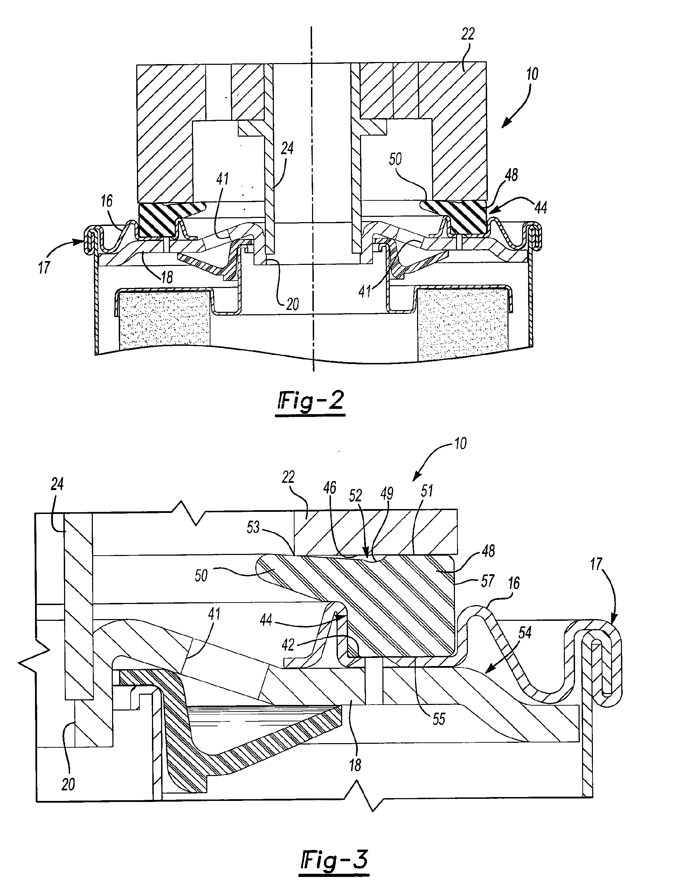

Referring to Figures 2 and 3, the retainer 16 may include an annular recess 42 or seat radially outward of the apertures for receiving the inventive gasket 44. The shape of the annular recess 42 and gasket 44 may be of any suitable shape, but is preferably circular from a top view. The gasket 44 provides a seal between a surface 46 of the mounting structure 22 and the filter 10. The gasket 44 includes a body 48 with a flap 50 extending inwardly and upwardly away from the recess 42. The flap 50 may be proximate to the apertures 41.

The cross-section of the gasket 44 may be of any shape. For the example shown, the body 48 is a generally quadrangular cross-section with the flap 50 extending from a comer of the body 48. Referring to Figures 1 and 3, the inventive gasket 44 may include a groove 49 or notch arranged between the flap 50 and body 48 to increase the flexibility of the flap 50 relative to the body 48. The groove 49 creates a cavity 52 between the gasket 44 and the surface 46.

The body 48 includes an upper surface 51 that engages the surface 46 of the mounting structure 22 under compression to provide a primary seal. The flap 50 also engages the surface 46, for example, in the embodiment shown at a corner 53 of the surface 46. The flap 50 engages the corner 53 under a compression applying a first force. When the filter 10 contains pressurized oil, a second force is generated on the flap biasing the flap into engagement with the corner 53 to provide an enhanced seal to that of the compression seal provided by the body. As the case bottom assembly 17 deflects at its periphery 54, the flap 50 will continue to provide an adequate seal to prevent leakage past the gasket 44. In one example, the inventive flap 50 may enable the oil pressure be increased by 16 psi prior to leakage of oil past the gasket 44.

The gasket 44 includes spaced apart upper 51 and lower 55 surfaces on the body 48. The surfaces 51, 55 lie in opposing planes. Another surface 57 adjoins the surfaces 51, 55. The flap 50 extends inwardly from the body 48 away from one of the opposing planes and the surface 57. The flap 50 extends beyond the other opposing plane in an uncompressed state, which is best shown in Figure 1. In a compressed state, which is best shown in Figure 3, the flap 50 may extend only slightly beyond the plane of the upper surface 51 or not at all.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A fluid filter comprising:
a housing including an end having a plate with a fluid aperture, said end including an annular recess arranged outwardly of said fluid aperture; and
a gasket seated in said annular recess, said gasket including a body and a flap extending inwardly from said body and away from said annular recess.

2. The fluid filter according to claim 1, wherein said body has a generally quadrangular cross-section.

3. The fluid filter according to claim 1 or 2, wherein said gasket includes a groove opposite said annular recess between said flap and said body.

4. The fluid filter according to any preceding claim, wherein said gasket includes an uncompressed state, said body including an upper surface opposite said annular recess defining a plane, said flap extending beyond said plane in said uncompressed state.

5. The fluid filter according to claim 4, wherein said gasket includes a compressed state with less of said flap extending beyond said plane than in said uncompressed state.

6. The fluid filter according to any preceding claim, wherein said plate is a tapping plate including a central threaded hole, said housing including a can and said end including a retainer secured to said can and having said annular recess, said tapping plate arranged interiorly and adjacent to said retainer.

7. The fluid filter according to any preceding claim, wherein said flap is proximate to said fluid aperture.

8. A fluid filter system comprising:
a mounting structure including a threaded stud and a sealing surface spaced outwardly from said threaded stud;
a housing having a can including an open end, a tapping plate arranged at said open end and including a fluid aperture, and a retainer secured to said can with said tapping plate located interiorly and adjacent to said retainer, said retainer including an annular recess arranged outwardly of said fluid aperture; and
a gasket seated in said annular recess, said gasket including a body and a flap extending inwardly from said body and away from said annular recess, said gasket having a groove arranged between said body and flap forming a cavity between said gasket and said sealing surface, said flap engaging said surface under a first force.

9. The fluid filter system according to claim 8, wherein said sealing surface includes a comer, said flap engaging said comer.

10. The fluid filter system according to claim 8 or 9, wherein said flap engages said sealing surface under a second force greater than said first force under fluid pressure.

11. The fluid filter system according to any one of claims 8 to 10, wherein said mounting structure is an engine block.

12. The fluid filter system according to any one of claims 8 to 10, wherein said mounting structure is a remote oil filter adapter.

13. A fluid filter gasket comprising:
a generally annular body having opposing surfaces in opposing planes, a circumferential surface adjoining said opposing surfaces; and
a flap extending inwardly from said body and away from one of said opposing planes and said circumferential surface, said flap extending beyond the other of said opposing planes in an uncompressed state.

14. The fluid filter gasket according to claim 13, wherein said body has a generally quadrangular cross-section.

15. The fluid filter gasket according to claim 13 or 14, wherein said gasket includes a groove opposite said other of said opposing planes between said flap and said body.
